# EUROPEAN PATENT SPECIFICATION

(11) **EP 2 901 252 B1**
(45) Date of publication and mention of the grant of the patent: **30.10.2019**
(21) Application number: 13841859.5
(22) Date of filing: 27.09.2013
(51) Int. Cl.: G06F 3/01, G06F 3/0346, G06F 21/31, G06F 3/041, G06F 3/042, H04L 29/06, H04M 1/67, H04W 12/06, H04W 88/02, G06F 3/0488

(54) **LOCKING AND UNLOCKING OF CONTACTLESS GESTURE-BASED USER INTERFACE OF DEVICE HAVING CONTACTLESS GESTURE DETECTION SYSTEM**
VER- UND ENTRIEGELUNG EINER BERÜHRUNGSLOSEN GESTENBASIERTEN BENUTZEROBERFLÄCHE EINER VORRICHTUNG MIT EINEM BERÜHRUNGSLOSEN GESTENERKENNUNGSSYSTEM
VERROUILLAGE ET DÉVERROUILLAGE D'UNE INTERFACE UTILISATEUR BASÉE SUR UN GESTE SANS CONTACT D'UN DISPOSITIF AYANT UN SYSTÈME DE DÉTECTION DE GESTE SANS CONTACT

(30) Priority: 27.09.2012 US 201261706714 P; 25.09.2013 US 201314036861
(43) Date of publication of application: 05.08.2015
(73) Proprietor: Analog Devices Global Unlimited Company, Hamilton (BM)
(72) Inventor: STRAKER, Andre, Mississauga, Ontario L5M 0V6 (CA); FANG, Wei Ken, Richmond Hill, Ontario L4B 1Y5 (CA); JEON, Duk-Ho, Seoul 122-811 (KR); NEWCOMBE, Dalton J., Toronto, Ontario M4R 1P3 (CA)
(74) Representative: Yang, Shu
(86) International application number: PCT/US2013/062411
(87) International publication number: WO 2014/052895

(56) References cited:
- EP-A1- 2 482 168
- WO-A1-2011/098496
- WO-A2-2008/110895
- US-A1- 2011 260 829
- US-A1- 2011 310 005
- US-A1- 2011 310 005
- US-A1- 2012 023 458

## Description

### PRIORITY DATA

This application is a non-provisional application of U.S. Provisional Patent Application Serial No. 61/706,714, filed September 27, 2012.

### TECHNICAL FIELD

The present disclosure relates generally to devices having contactless gesture detection systems, and more particularly, to locking/unlocking mechanisms for the contactless gesture detection systems, and thereby locking/unlocking mechanisms for contactless gesture-based user interfaces provided by the contactless gesture detection systems.

### BACKGROUND

Many devices implement gesture-based detection systems to provide gesture-based user interfaces that allow users to interact with and control the devices. Contactless gesture detection systems, such as optical-based (vision-based) gesture detection systems, can extend user interfaces into thin air, such that the user can interact with and control devices without contacting the device. One problem associated with implementing a contactless gesture detection system, and thus a contactless gesture-based user interface, in a device arises from unintentional activation of the contactless gesture detection system and accordingly unintentional use of the contactless gesture-based user interface. For example, during general use of the device, a user's movements can be unintentionally interpreted by the contactless gesture detection system as a specific, predefined gesture for controlling the device via the contactless gesture-based user interface, thus triggering the device to perform an unintended function. Accordingly, although contactless gesture detection systems have been generally adequate for their intended purposes, they have not been entirely satisfactory in all respects.

United States patent application no. 13/161,955, having publication no. 2011/0310005, discloses systems and methods for performing contactless gesture recognition for a computing device, such as a mobile computing device. An example technique for managing a gesture-based input mechanism for a computing device includes identifying parameters of the computing device relating to accuracy of gesture classification performed by the gesture-based input mechanism and managing a power consumption level of at least an infrared (IR) light emitting diode (LED) or an IR proximity sensor of the gesture-based input mechanism based on the parameters of the computing device.

United States patent application no. 12/764,298, having publication no. 2011/0260829, discloses a method of providing security on a portable electronic device. In accordance with one embodiment, there is provided a portable electronic device, comprising: a processor; a touch-sensitive display having a touch-sensitive overlay connected to the processor; wherein the processor is configured for: locking the device in response to detection of a trigger condition; detecting touch gestures performed at any location on the touch-sensitive display; adding a distinct input value associated with each identified touch gesture to an input buffer to form a series of input values; comparing the series of input values in the input buffer to a series of values corresponding to a predetermined touch gesture passcode sequence; and unlocking the device when the series of input values in the input buffer match the series of values corresponding to the predetermined touch gesture passcode sequence.

### SUMMARY

A first aspect provides a method according to appended claim 1.

A second aspect provides a portable device according to appended claim 10.

A third aspect provides a computer program product according to appended claim 16.

### BRIEF DESCRIPTION OF DRAWINGS

The present disclosure is best understood from the following detailed description when read with the accompanying figures. It is emphasized that, in accordance with the standard practice in the industry, various features are not drawn to scale and are used for illustration purposes only. In fact, the dimension of the various features may be arbitrarily increased or reduced for clarity of discussion.
FIGURE 1. is a simplified block diagram of an exemplary device having a contactless gesture detection system according to various aspects of the present disclosure.
FIGURE 2 is a flowchart of an exemplary method for controlling a contactless gesture-based user interface state of a device having a contactless gesture detection system according to various aspects of the present disclosure.
FIGURE 3A illustrates a defined gesture sequence that can be implemented to transition a contactless gesture-based user interface state of a device according to various aspects of the present disclosure.
FIGURE 3B illustrates a saturation gesture that can be implemented to transition a device to a contactless gesture-based user interface lock state according to various aspects of the present disclosure.
FIGURE 4 is a simplified block diagram of an exemplary system architecture for a contactless gesture detection system that can implement a locking/unlocking mechanism for controlling a contactless gesture-based user interface state of a device according to various aspects of the present disclosure.
FIGURE 5A, FIGURE 5B, and FIGURE 5C depict various state machines that can be implemented by a contactless gesture detection system to control a contactless gesture-based user interface state of a device according to various aspects of the present disclosure.

### OVERVIEW OF EXAMPLE EMBODIMENTS

A locking/unlocking mechanism for a contactless gesture detection system of a device is described herein. The locking/unlocking mechanism can facilitate automatic locking, manual locking, and/or manual unlocking of the contactless gesture detection system. The locking mechanism can disable a contactless gesture detection system from triggering the device to perform a function associated with detected gestures. The unlocking mechanism can enable the contactless gesture detection system to trigger the device to perform a function associated with detected gestures.

In various implementations, a contactless gesture detection system can be configured to provide a contactless gesture-based user interface for a device, such that a user can interact with the device via the contactless gesture-based user interface. The contactless gesture detection system can implement the locking/unlocking mechanisms described herein to control a contactless gesture-based user interface state of the device. In various implementations, the controlling can include detecting gestures associated with a user in a contactless space associated with the device; detecting a defined gesture sequence over a defined time period from the detected gestures; and transitioning the device to a contactless gesture-based user interface locked state or a contactless gesture-based user interface unlocked state based on the defined gesture sequence.

### DETAILED DESCRIPTION OF EXAMPLE EMBODIMENTS

Many devices implement gesture-based detection systems to provide gesture-based user interfaces that allow users to interact with and control the devices. Existing gesture-based detection systems can be classified as motion-based, touch-based, and/or optical-based (vision-based) gesture detection systems. Optical-based gesture detection systems can extend user interfaces into thin air - extending the user interfaces into a contactless space around the devices (and can thus alternatively be referred to as contactless gesture detection systems). For example, a panning feature can be implemented by a user's hand (or finger(s)) moving up, down, left, right, and/or diagonally around a device's display without physically contacting the device to effect the panning feature. In another example, a zoom-in feature can be implemented by a user's hand (or finger(s)) moving closer to the device's display, and a zoom-out feature can be implemented by the user's hand (or finger) moving away from the device's display. Using the contactless gesture detection system, other device control and/or navigation features can be implemented by the user's various hand (or finger(s)) motions in the contactless space around the device, without physically contacting the device.

One problem associated with implementing a contactless gesture detection system, and thus a contactless gesture-based user interface, in a device arises from unintentional activation of the contactless gesture detection system and accordingly unintentional use of the contactless gesture-based user interface. For example, during general use of the device, a user's movements can be unintentionally injected into the contactless gesture detection system (referred to as unwanted gestures) and interpreted via gesture algorithms by the contactless gesture detection system as a specific, predefined gesture for controlling the device via the contactless gesture-based user interface, thus triggering the device to perform an unintended function. For example, during normal device usage, the user's hand (or finger(s)) may move to or from a touch-sensitive display of the device to select an application via a touch-based user interface. The contactless gesture detection system may interpret this as a specific gesture (for example, as a zoom-in or zoom-out gesture), thereby triggering the device to perform an unintended function (such as the zoom-in or zoom-out) associated with the specific gesture. Since the contactless gesture detection system cannot know the user's intent, the contactless gesture detection system will interpret any gestures received by (injected into) contactless gesture detection system via the contactless gesture-based user interface and trigger the device to perform a function associated with the gestures, whether or not the user intended to invoke the contactless gesture-based user interface to control device functionality.

To prevent unintended use of the contactless gesture-based user interface, the following discussion explores a locking/unlocking mechanism for the contactless gesture detection system that can deactivate/activate the contactless gesture-based user interface of the device and notify the user to the deactivated (locked) state or activated (unlocked) state of the contactless gesture-based user interface. When the device is in a contactless gesture-based user interface locked state, the locking/unlocking mechanism can disable the contactless gesture detection system from triggering the device to perform functions associated with gestures detected in the contactless space of the device. Further, when the device is in a contactless gesture-based user interface unlocked state, the locking/unlocking mechanism can enable the contactless gesture detection system to trigger the device to perform functions associated with the detected gestures. Such locking/unlocking mechanism can enhance user experience by ensuring that the device enables the contactless gesture-based user interface when needed, yet disables the contactless gesture-based user interface when not needed and/or when not in use after some time, thereby minimizing user frustration that can arise from unintentional use of the contactless gesture-based user interface. Different embodiments may have different advantages, and no particular advantage is necessarily required of any embodiment.

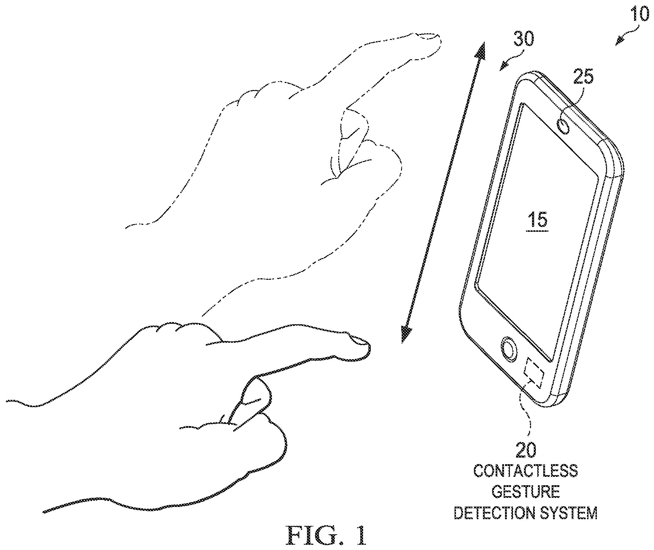

Turning to FIGURE 1, a simplified block diagram of an exemplary device 10 having a contactless gesture detection system that facilitates user interaction with and control of the device 10 via a contactless gesture-based user interface is provided according to various aspects of the present disclosure. In the depicted embodiment, device 10 is a portable electronic device, such as a smartphone. Alternatively, the portable electronic device is a handheld computer, a tablet computer, a media player, a personal digital assistant (PDA), a mobile phone, a laptop computer, other portable electronic device, or a combination thereof. FIGURE 1 has been simplified for the sake of clarity to better understand the inventive concepts of the present disclosure. Additional features can be added in device 10, and some of the features described below can be replaced or eliminated in other embodiments of device 10.

Device 10 includes a display 15 (such as a touch-sensitive display) and a contactless gesture detection system 20 including a sensor device 25. Contactless gesture detection system 20 provides a contactless gesture-based user interface for device 10, such that contactless gesture detection system 20 facilitates user interaction with and control of device 10 via the contactless gesture-based user interface. Contactless gesture detection system 20 is configured to detect gestures and trigger device 10 to perform functions in response to the detected gestures. In the depicted embodiment, contactless gesture detection system 20 detects gestures within a contactless space 30 of device 10, where the user can interact with and control device 10 by performing gestures within the contactless space 30, for example, by moving the user's hand (finger(s)) within the contactless space 30. In various implementations, sensor device 25 can use reflected light (such as infrared light) to detect proximity of the user's hand (finger(s)) to device 10 within contactless space 30 and/or track the user's hand (finger(s)) movement within contactless space 30. Such information can be used by contactless gesture detection system 20 to identify a gesture or a series of gestures that define a function to be performed by device 10. In various implementations, contactless gesture detection system 20 is an optical gesture detection system and sensor device 25 includes an optical proximity sensor.

Device 10 can have various user interface states, where each user interface is associated with how device 10 responds to user input via the user interface. For example, device 10 has various contactless gesture-based user interface states, where each contactless gesture-based user interface state is associated with how device 10 responds to user input via the contactless gesture-based user interface. In the depicted embodiment, device 10 has a contactless gesture-based user interface locked state and a contactless gesture-based user interface unlocked state. Device 10 can be transitioned between the contactless gesture-based user interface locked state and the contactless gesture-based user interface unlocked state, depending on whether the user desires to use the contactless gesture-based interface for interacting with and controlling device 10.

The contactless gesture-based user interface locked state can prevent unintended use of the contactless gesture-based user interface. In the contactless gesture-based user interface locked state, contactless gesture-based user interface is deactivated, and device 10 ignores gestures performed by the user in the contactless space of device 10, such that device 10 does not perform functions in response to the gestures. For example, contactless gesture detection system 20 is disabled from triggering device 10 to perform functions associated with the gestures detected by contactless gesture detection system 20. In various implementations, a portion of contactless gesture detection system 20 still detects gestures and blocks the gestures from (prevents the gestures being injected into) a portion of contactless gesture detection system 20 that is responsible for triggering device 10 to perform the functions associated with the detected gestures. Contactless gesture detection system 20 thus enters a locked state, where contactless gesture detection system 20 locks the contactless gesture-based user interface. In various implementations, when device 10 is in the contactless gesture-based user interface locked state, an application of device 10 is prevented from responding to any gestures detected by contactless gesture detection system 20. It is noted that device 10 can be configured to respond to some gestures while in the contactless gesture-based user interface locked state. For example, contactless gesture detection system 20 responds to gestures associated with transitioning device 10 from the contactless gesture-based user interface locked state to the contactless gesture-based user interface unlocked state and/or some other user interface state. In various implementations, contactless gesture detection system 20 triggers device 10 to transition to the contactless gesture-based user interface unlocked state when contactless gesture detection system 20 identifies an unlock gesture(s) from the detected gestures.

In the contactless gesture-based user interface unlocked state, contactless gesture-based user interface is activated, and device 10 responds to gestures performed by the user in the contactless space of device 10, such that device 10 performs functions in response to the gestures. For example, contactless gesture detection system 20 is enabled to trigger device 10 to perform functions associated with the gestures detected by contactless gesture detection system 20. Contactless gesture detection system 20 thus enters an unlocked state, where contactless gesture detection system 20 unlocks the contactless gesture-based user interface. In various implementations, an application of device 10 responds to gestures detected by contactless gesture detection system 20. In various implementations, a panning feature, a zoom-in feature, a zoom-out feature, a navigating feature, and/or other feature can be performed by device 10 in response to gestures performed by the user in the contactless space 30 of device 10, where such gestures are detected and interpreted by contactless gesture detection system 20.

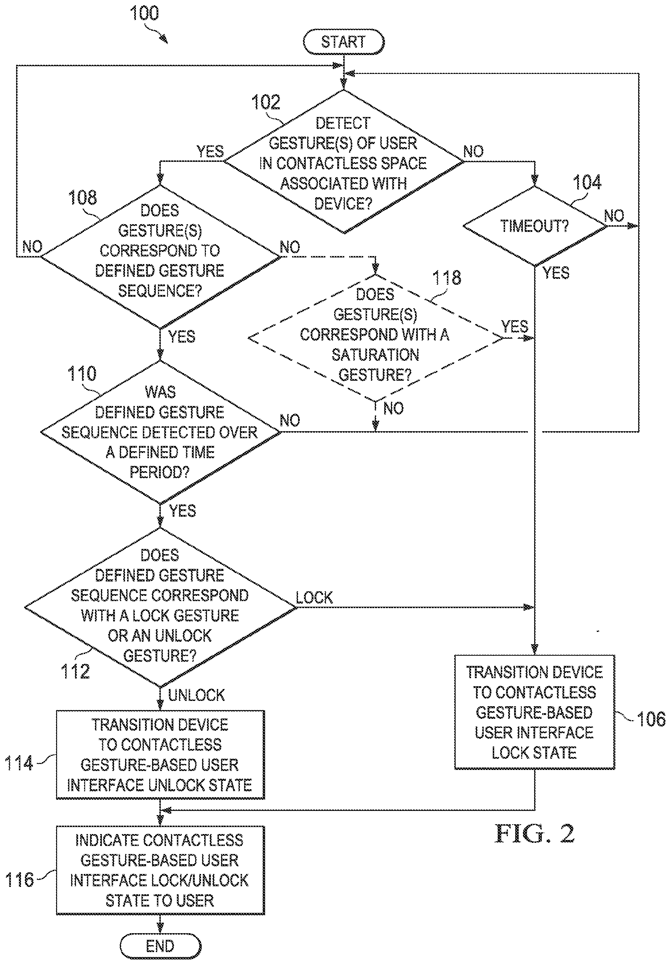

FIGURE 2 is a flowchart of an exemplary method 100 for controlling a contactless gesture-based user interface state of a device having a contactless gesture detection system, such as device 10 having contactless gesture detection system 20 described and illustrated in FIGURE 1, according to various aspects of the present disclosure. In various implementations, contactless gesture detection system 20 can implement method 100 to provide an automatic locking mechanism that transitions device 10 to the contactless gesture-based user interface lock state after a timeout, a manual locking mechanism that transitions device 10 to the contactless gesture-based user interface lock state in response to a defined user lock action, and/or a manual unlocking mechanism that transitions device 10 to the contactless gesture-based user interface unlock state in response to a defined user unlock action. In various implementations, when device 10 transitions to the contactless gesture-based user interface lock state, contactless gesture detection system 20 can be placed into a minimum power state, thereby reducing power consumption of device 10. FIGURE 2 has been simplified for the sake of clarity to better understand the inventive concepts of the present disclosure.

Automatic locking mechanism transitions device 10 to the contactless gesture-based user interface locked state after a defined time period of no gesture activity. In various implementations, automatic locking mechanism can be based on a timeout. Turning to block 102 of method 100, locking/unlocking mechanism determines whether any gestures of a user are detected in a contactless space associated with a device, such as device 10. At block 102, if no gestures are detected in the contactless space associated with device 10 (for example, contactless gesture detection system 20 does not detect any gestures), method 100 proceeds to block 104 where automatic locking mechanism determines whether a defined time period has elapsed (expired). The defined time period is programmable, such that the defined time period can be varied depending on device and/or user needs and/or preferences. If timeout has occurred, at block 106, device 10 transitions to the contactless gesture-based user interface lock state. If no timeout has occurred, method 100 returns to block 102 and the locking/unlocking mechanism continues to determine whether any gestures are detected in the contactless space associated with device 10. In various implementations, contactless gesture detection system 20 includes a countdown timer, and a timeout occurs when the countdown timer expires. The countdown timer resets when contactless gesture detection system 20 detects any gesture at block 102.

Manual locking/unlocking mechanism transitions device 10 to the contactless gesture-based user interface locked/unlocked state when a defined gesture sequence is detected within a defined time period. For example, returning to block 102, if gestures are detected in the contactless space associated with device 10 (for example, contactless gesture detection system 20 detects gestures), method 100 proceeds to block 108 where manual locking/unlocking mechanism determines whether the detected gestures correspond to a defined gesture sequence. The defined gesture sequence can correspond with a lock gesture that corresponds with the user indicating that device 10 should transition to the contactless gesture-based user interface lock state or an unlock gesture that corresponds with the user indicating that device 10 should transition to the contactless gesture-based user interface unlock state. If the gestures correspond with a defined gesture sequence, method 100 proceeds to block 110 where manual locking/unlocking mechanism determines whether the defined gesture sequence was detected over a defined time period. If the gestures do not correspond with a defined gesture sequence or the defined gesture sequence is not detected over the defined period of time, method 100 returns to block 102 and the locking/unlocking mechanism continues to determine whether any gestures are detected in the contactless space associated with device 10.

If the gestures correspond with the defined gesture sequence over the defined period of time, method 100 proceeds to block 110 where manual locking/unlocking mechanism determines whether the defined gesture sequence corresponds with the lock gesture or the unlock gesture. If the defined gesture sequence corresponds with the lock gesture, method 100 proceeds to block 106, and device 10 transitions to the contactless gesture-based user interface lock state. If the defined gesture sequence corresponds with the unlock gesture, method 100 proceeds to block 114, and device 10 transitions to the contactless gesture-based user interface unlock state. In various implementations, contactless gesture detection system 20 detects the defined gesture sequence over the defined time period, and then triggers the device 10 to transition to the contactless gesture-based user interface state corresponding with the defined gesture sequence. In various implementations, as further detailed below, when device 10 transitions to the contactless gesture-based user interface lock state, gestures are blocked from a portion of contactless gesture detection system 20, such that gestures are not injected into the portion of contactless gesture detection system 20. For example, in various implementations, gestures are not injected into the portion of contactless gesture detection system 20 that triggers device 10 to perform functions in response to the gestures.

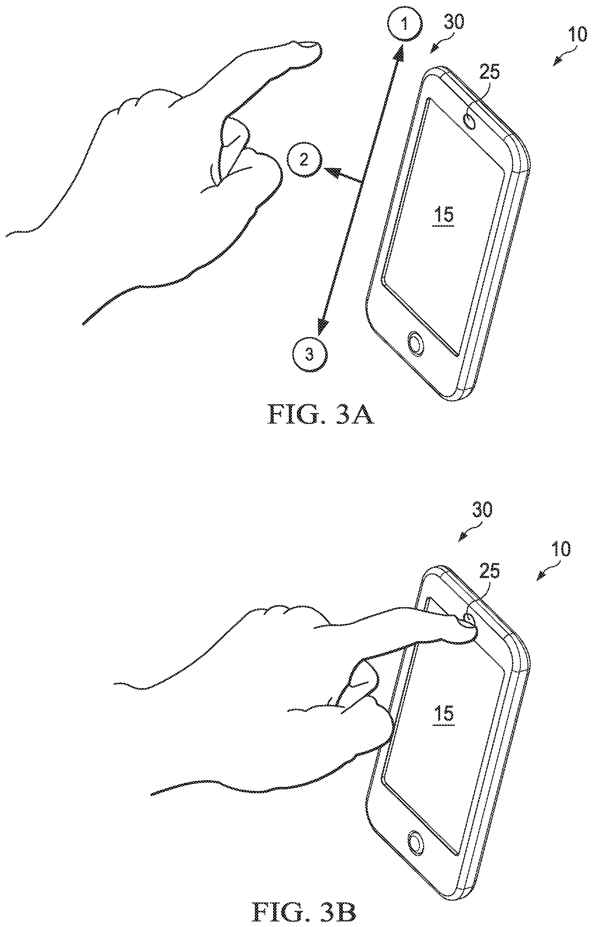

In the present example, the defined gesture sequence includes any series of gestures, and the defined time period indicates a time within which the defined gesture sequence should be completed. In various implementations, the user defines a series of gestures that represent the lock/unlock gesture sequence, the user defines a time period for completing the series of gestures that indicates that the series of gestures is the lock/unlock gesture sequence, or a combination thereof. In various implementations, device 10 can define the series of gestures and/or completion time period that represents the lock/unlock gesture sequence. FIGURE 3A illustrates a defined gesture sequence that can be implemented to transition a contactless gesture-based user interface state of a device, such as device 10, according to various aspects of the present disclosure. In FIGURE 3A, the defined gesture sequence is an unlock gesture that corresponds with the user directing device 10 to transition to the contactless gesture-based user interface unlock state. The depicted defined gesture sequence includes three stages, for example, three different gestures performed by the user in the contactless space of device 10 within a specified time period. For example, the defined gesture sequence includes the user's hand (finger) moving (1) up, (2) left, then (3) down within the specified time period (for example, within a 5 second period). In various implementations, the defined lock/unlock gesture sequence includes the user's hand (finger) moving (1) up, (2) down, then (3) up within the specified time period; moving (1) left, (2) right, then (3) left within the specified time period; moving (1) down, (2) down, then (3) down within the specified time period; moving (1) left, (2) down, then (3) right within the specified time period; or any other series of user hand (finger) movements within the specified time period. It is noted that, in some implementations, the defined time period may define a minimum time period between each gesture in the series of gestures.

Complexity of the defined gesture sequence and/or defined time period can vary to ensure that contactless gesture detection system 20 can prevent false positives - where contactless gesture detection system 20 incorrectly detects a series of gestures as the defined lock/unlock gesture sequence - while maximizing the ease with which the user can transition device 10 to the contactless gesture-based user interface states. For example, a single gesture lock/unlock sequence or a two gesture unlock/lock sequence may easily generate false positives since the user may unintentionally perform the single or two gesture lock/unlock sequence during general use of device 20, thereby unintentionally transitioning the contactless gesture-based user interface state. Lock/unlock sequences having at least three gesture can thus minimize false positives, though lock/unlock sequences having too many gestures can increase difficulty for the user to perform the correct lock/unlock sequences. In another example, timing constraints that are too loose may also easily generate false positives since the lock/unlock gesture sequence may seamlessly fit into the user's natural movements during normal use of the device 10. Further, timing constraints that are too tight may prove difficult for the user to perform the lock/unlock gesture sequence within the defined time period, forcing the user to retry the lock/unlock gesture sequence until it is performed within the defined time period, which can cause frustration and discontent in the user's experience. In yet another example, in some situations, the lock/unlock gesture sequence may include a series of gestures that are insufficiently distinct (such as lock/unlock gesture sequences including (1) up, (2) down, then (3) up gestures or (1) left, (2) right, then (3) left gestures), thereby easily generating false positives since the lock/unlock gesture sequence may seamlessly fit into the user's natural movements during normal use of the device 10. In various implementations, the defined gesture sequence thus includes a series of gestures that is sufficiently distinct to reduce false positives, such as a series of gestures in one direction (for example, lock/gesture sequences including (1) down, (2) down, then (3) down gestures) or a series of gestures that combines orthogonal directions (for example, lock/gesture sequences including (1) left, (2) down, then (3) right gestures). Accordingly, the locking/unlocking mechanism balances various lock/unlock gesture sequence factors, such as the number of gestures, types of gestures, and completion time for the gestures, to minimize false positive and maximize user experience.

Method 100 can proceed to block 116 when device 10 transitions to contactless gesture-based user interface lock state (at block 106) or contactless gesture-based user interface unlock state (at block 114). At block 116, the contactless gesture-based user interface lock/unlock state of device 10 is indicated to the user. The indication to the user may be a visual indication (such as textural, graphical, other visual indication, or combination thereof), an audio indication, a tactile indication (such as a vibration indication), or combination thereof. In various implementations, device 10 displays a lock image in response to device 10 transitioning to the contactless gesture-based user interface locked state, and device 10 displays an unlock image in response to device 10 transitioning to the contactless gesture-based user interface unlocked state. The indication to the user may be a permanent indication, a temporary indication, or both. For example, in various implementations, device 10 can include a permanent icon in a status bar of display 15 of device 10 that indicates the contactless gesture-based user interface lock/unlock state. In another example, in various implementations, a notification message temporarily appears on display 15 to notify the user that device 10 has transitioned to the contactless gesture-based user interface lock state or the contactless gesture-based user interface unlock state. In yet another example, in various implementations, device 10 vibrates in response to transitioning its contactless gesture-based user interface state, such that the user can further be made aware of the contactless gesture-based user interface state transition. Since contactless gesture detection system 20 may not provide 100% accurate gesture detection, indicating the contactless gesture-based user interface state can ensure that the user is aware of the contactless gesture-based user interface state, thereby enhancing user experience with device 10. For example, the user can avoid situations where device 10 is in the contactless gesture-based user interface lock state, but the user repeatedly performs gestures intended to interact with or control device 10 because the user does not realize that device 10 is in the contactless gesture-based user interface lock state. In another example, the indication ensures that the user knows whether he/she has performed a successful lock/unlock gesture sequence, thereby avoiding multiple attempts by the user to perform the lock/unlock gesture sequence.

Manual locking mechanism can also transition device 10 to the contactless gesture-based user interface lock state when a saturation gesture is detected. For example, returning to block 108, if the gestures do not correspond with a defined gesture sequence, method 100 can proceed to block 118, where the locking/unlocking mechanism determines whether the detected gestures correspond with a saturation gesture. The saturation gesture is a deliberate gesture performed by the user to transition device 10 to the contactless gesture-based user interface lock state. If the gesture corresponds with the saturation gesture, method 100 proceeds to block 106, and device 10 transitions to the contactless gesture-based user interface lock state. FIGURE 3B illustrates a saturation gesture that can be implemented to transition a device, such as device 10, to a contactless gesture-based user interface lock state according to various aspects of the present disclosure. In FIGURE 3B, the user's hand/finger(s) is placed over (covering) the sensor of contactless gesture detection system 20 within the contactless space of device 10. Returning to method 100, if the gestures do not correspond with the saturation gesture, method 100 returns to block 102 and the locking/unlocking mechanism continues to determine whether any gestures are detected in the contactless space associated with device 10. In various implementations, the saturation gesture may correspond with an automatic locking mechanism, where any object can be placed over (covering) the sensor of contactless gesture detection system 20 to trigger device 10 to transition to the contactless gesture-based user interface lock state. Such configuration can provide automatic locking of the device 10, for example, when device 10 is placed into a case, bag, pocket, or other situation where device 10 is no longer in use.

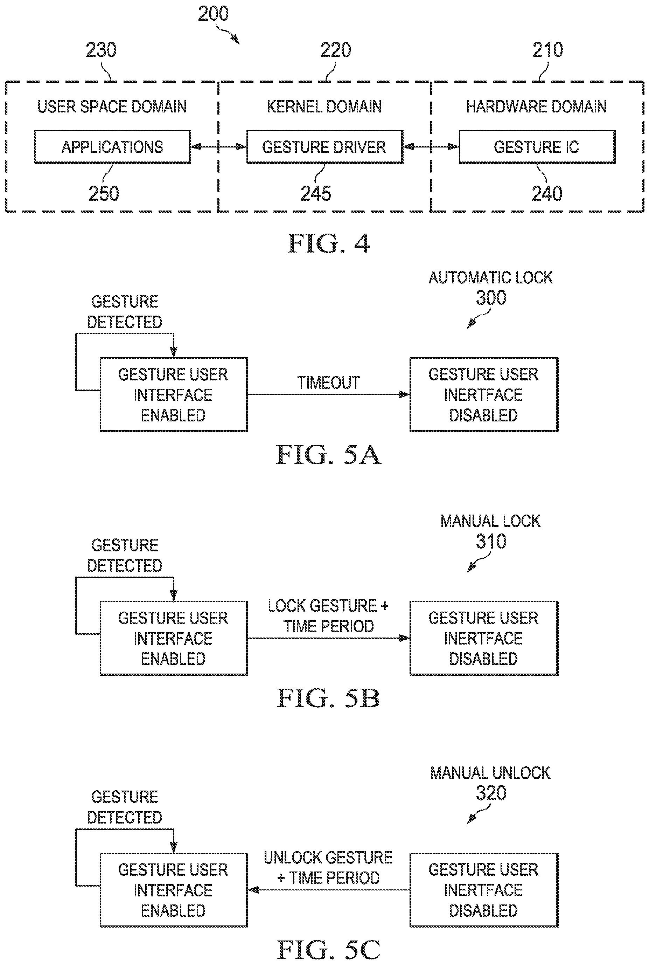

Turning to FIGURE 4, a simplified block diagram of an exemplary system architecture for a contactless gesture detection system 200 is provided that can implement a locking/unlocking mechanism, such as the locking/unlocking mechanisms described herein, for controlling a contactless gesture-based user interface state of a device according to various aspects of the present disclosure. In various implementations, contactless gesture detection system 200 can be implemented in device 10 as contactless gesture detection system 20 of FIGURE 1. FIGURE 4 has been simplified for the sake of clarity to better understand the inventive concepts of the present disclosure. Additional features can be added in contactless gesture detection system 200, and some of the features described below can be replaced or eliminated in other embodiments of contactless gesture detection system 200.

In FIGURE 4, contactless gesture detection system 200 includes a hardware domain 210 and a software domain that includes a kernel domain 220 and a user space domain 230. Hardware domain 210 can include hardware for executing programs and services within kernel domain 220 and user space domain 230. Kernel domain 220 and user space domain 220 can represent distinct regions of a memory of contactless gesture detection system 200 and/or a memory of a device (such as device 10) that includes contactless gesture detection system 200. For example, kernel domain 220 is a portion of the memory where a kernel (such as a program that constitutes a core of an operating system associated with contactless gestures system 200) executes (runs) and provides its services, such as providing access, control, and management of resources between hardware domain 210 and user space domain 230; and user space domain 230 is a portion of the memory that can execute user programs, thereby providing user applications and provisioning of user level programs, services, processes and/or tasks. In the depicted embodiment, hardware domain 210 includes a processor, such as gesture integrated circuit (IC) 240; kernel domain 220 includes a device driver, such as a gesture driver 245; and user space domain includes applications 250 that can facilitate the. Gesture IC 240, gesture driver 245, and applications 250 can provide a contactless gesture-based user interface for a device that includes contactless gesture detection system 200, along with a locking/unlocking mechanism for controlling a contactless gesture-based user interface state, such as that described herein.

Contactless gesture detection system 200 can confine the locking/unlocking mechanisms described herein to a specific domain (such as hardware domain 210, kernel domain 220, or user space domain 230), where the specific domain is completely responsible for the locking/unlocking mechanism. Confining the locking/unlocking mechanism to a lower domain can reduce data traffic, while confining the locking/unlocking mechanism to a higher domain can provide flexible adjustment and/or expansion of the locking/unlocking mechanism, thereby facilitating various locking/unlocking mechanism configurations. Alternatively, contactless gesture detection system 200 can spread the locking/unlocking mechanism across more than one domain. Spreading the locking/unlocking mechanism across various domains provides flexible system configuration options, where the locking/unlocking mechanism can be flexibly adjusted according to various system configurations and/or system end users.

FIGURE 5A, FIGURE 5B, and FIGURE 5C depict various state machines 300, 310, and 320 that can be implemented by a contactless gesture detection system, such as the contactless gesture detection system 200 illustrated in FIGURE 4, to control a contactless gesture-based user interface state of a device according to various aspects of the present disclosure. State machine 300, state machine 310, and state machine 320 can be implemented by hardware domain 210 (such as by gesture IC 240) of contactless gesture detection system 200, kernel domain 220 (such as by gesture driver 245) of contactless gesture detection system 200, user space domain 230 (such as by applications 250) of contactless gesture detection system 200, or a combination thereof. In various implementations, state machines 300, 310, and 320 can alternatively be implemented by device 10.

In FIGURE 5A, contactless gesture detection system 200 implements state machine 300 to achieve an automatic locking mechanism that transitions a device to a contactless gesture-based user interface lock state. State machine 300 depicts a contactless gesture-based user interface unlocked state, where contactless gesture-based user interface is enabled (activated) so that the user can interact with and control the device via the contactless gesture-based user interface, and a contactless gesture-based user interface locked state, where contactless gesture-based user interface is disabled (deactivated) so that the user cannot interact with and control the device via the contactless gesture-based user interface. While gestures are detected by contactless gesture detection system 200, contactless gesture-based user interface is enabled, such that a device associated with contactless gesture detection system 200 remains in the contactless gesture-based user interface unlock state. When a timeout occurs (a period of time where no gestures are detected), automatic locking mechanism disables the contactless gesture-based user interface, thereby transitioning the device to the contactless gesture-based user interface lock state. In various implementations, when in the contactless gesture-based user interface lock state, gestures are no longer injected into a portion of contactless gesture detection system 200. For example, in various implementations, kernel domain 220 implements a gesture blocking feature, where gesture driver 245 prevents gesture IC 240 from receiving gestures when timeout occurs, and thus prevents gesture IC 240 from triggering its associated device from performing functions based on the received gestures. In various implementations, hardware domain 220 implements the gesture blocking feature, where gesture IC 240 prevents its associated device from receiving gestures and thereby from performing functions based on the received gestures. Implementing the gesture blocking feature at the hardware domain 210 can remove unnecessary activity/communication between the hardware domain 210 and kernel domain 220 and/or user space domain 230 (device-host communication channel), as well as reduce work necessary for contactless gesture detection system 200 to implement the gesture blocking feature at kernel domain 220. In various implementations, user space domain 310 implements the timeout, such that the timeout occurs at the application/system service level (applications 250).

In FIGURE 5B, contactless gesture detection system 200 implements state machine 310 to achieve a manual locking mechanism that transitions a device to a contactless gesture-based user interface lock state. State machine 310 depicts a contactless gesture-based user interface unlocked state, where contactless gesture-based user interface is enabled (activated) so that the user can interact with and control the device via the contactless gesture-based user interface, and a contactless gesture-based user interface locked state, where contactless gesture-based user interface is disabled (deactivated) so that the user cannot interact with and control the device via the contactless gesture-based user interface. While gestures are detected by contactless gesture detection system 200, contactless gesture-based user interface is enabled, such that a device associated with contactless gesture detection system 200 remains in the contactless gesture-based user interface unlock state. When contactless gesture detection system 200 detects a lock gesture within a defined time period, manual locking mechanism disables the contactless gesture-based user interface, thereby transitioning the device to the contactless gesture-based user interface lock state. The lock gesture can be a defined gesture lock sequence and/or a saturation gesture, such as described in detail above. In various implementations, when in the contactless gesture-based user interface lock state, gestures are no longer injected into a portion of contactless gesture detection system 200. For example, in various implementations, kernel domain 220 implements the manual locking mechanism, such that gesture driver 245 detects the lock gesture within the defined time period and then implements a gesture blocking feature in response to detecting the lock gesture, where gesture driver 245 prevents gesture IC 240 from receiving gestures, and thus prevents gesture IC 240 from triggering its associated device from performing functions based on the received gestures.

In FIGURE 5C, contactless gesture detection system 200 implements state machine 320 to achieve a manual unlocking mechanism that transitions a device to a contactless gesture-based user interface unlock state. State machine 320 depicts a contactless gesture-based user interface unlocked state, where contactless gesture-based user interface is enabled (activated) so that the user can interact with and control the device via the contactless gesture-based user interface, and a contactless gesture-based user interface locked state, where contactless gesture-based user interface is disabled (deactivated) so that the user cannot interact with and control the device via the contactless gesture-based user interface. While contactless gesture-based user interface is disabled, when contactless gesture detection system 200 detects an unlock gesture within a defined time period, manual unlocking mechanism enables the contactless gesture-based user interface, thereby transitioning the device to the contactless gesture-based user interface unlock state. The unlock gesture can be a defined unlock gesture sequence, such as described in detail above. In various implementations, when in the contactless gesture-based user interface lock state, gestures are not injected into a portion of contactless gesture detection system 200, though contactless gesture detection system 200 receives gestures and determines whether the gestures correspond with the unlock gesture sequence. For example, in various implementations, kernel domain 220 implements the manual unlocking mechanism, such that gesture driver 245 detects the unlock gesture within the defined time period, while implementing a gesture blocking feature that prevents gesture IC 240 from receiving gestures while the device is in the contactless gesture-based user interface lock state.

The various functions outlined herein may be implemented by logic encoded in one or more non-transitory and/or tangible media (for example, embedded logic provided in an application specific integrated circuit (ASIC), as digital signal processor (DSP) instructions, software (potentially inclusive of object code and source code) to be executed by a processor, or other similar machine, etc.). In some of these instances, a memory element can store data used for the operations described herein. This includes the memory element being able to store logic (for example, software, code, processor instructions) that is executed by a processor to carry out the activities described herein. The processor can execute any type of instructions associated with the data to achieve the operations detailed herein. In various implementations, the processor can transform an element or an article (such as data) from one state or thing to another state or thing. In another example, the activities outlined herein may be implemented with fixed logic or programmable logic (such as software/computer instructions executed by the processor) and the elements identified herein can be some type of a programmable processor (such as a DSP), programmable digital logic (e.g., a FPGA, an erasable programmable read only memory (EPROM), an electrically erasable programmable ROM (EEPROM)), or an ASIC that includes digital logic, software, code, electronic instructions, or any suitable combination thereof.

In various implementations, the contactless gesture detection system and/or the various the circuits and/or components of the contactless gesture detection system and/or device illustrated in the FIGURES can be implemented on a board of an associated electronic device. The board can be a general circuit board that can hold various components of an internal electronic system of the electronic device and, further, provide connectors for other peripherals. The board can provide the electrical connections by which the other components of the system can communicate electrically. Any suitable processors (inclusive of digital signal processors, microprocessors, supporting chipsets, etc.), memory elements, etc. can be suitably coupled to the board based on particular configuration needs, processing demands, computer designs, other considerations, or a combination thereof. Other components, such as external storage, sensors, controllers for audio/video display, and peripheral devices may be attached to the board as plug-in cards, via cables, or integrated into the board itself.

In various implementations, the contactless gesture detection system and/or the various the circuits and/or components of the contactless gesture detection system and/or device illustrated in the FIGURES can be implemented as stand-alone modules (for example, a device with associated components and circuitry configured to perform a specific application or function) or implemented as plug-in modules into application specific hardware of electronic devices. Note that particular embodiments of the present disclosure may be readily included in a system-on-chip (SOC) package, either in part, or in whole. An SOC represents an integrated circuit that integrates components of a computer or other electronic system into a single chip. It may contain digital, analog, mixed-signal, and often radio frequency functions: all of which may be provided on a single chip substrate. Other embodiments may include a multi-chip-module (MCM), with a plurality of separate ICs located within a single electronic package and configured to interact closely with each other through the electronic package. In various other embodiments, the various functions described herein may be implemented in one or more semiconductor cores (such as silicon cores) in application specific integrated circuits (ASICs), field programmable gate arrays (FPGAs), other semiconductor chips, or combinations thereof.

Note that the activities discussed above with reference to the FIGURES are applicable to any integrated circuits that involve signal processing (for example, gesture signal processing), particularly those that can execute specialized software programs or algorithms, some of which may be associated with processing digitized real-time data. Certain embodiments can relate to multi-DSP signal processing, floating point processing, signal/control processing, fixed-function processing, microcontroller applications, etc. In certain contexts, the features discussed herein can be applicable to medical systems, scientific instrumentation, wireless and wired communications, radar, industrial process control, audio and video equipment, current sensing, instrumentation (which can be highly precise), and other digital-processing-based systems. Moreover, certain embodiments discussed above can be provisioned in digital signal processing technologies for medical imaging, patient monitoring, medical instrumentation, and home healthcare. This could include pulmonary monitors, accelerometers, heart rate monitors, pacemakers, etc. Other applications can involve automotive technologies for safety systems (e.g., stability control systems, driver assistance systems, braking systems, infotainment and interior applications of any kind). Furthermore, powertrain systems (for example, in hybrid and electric vehicles) can use high-precision data conversion products in battery monitoring, control systems, reporting controls, maintenance activities, etc. In yet other example scenarios, the teachings of the present disclosure can be applicable in the industrial markets that include process control systems that help drive productivity, energy efficiency, and reliability. In consumer applications, the teachings of the signal processing circuits discussed above can be used for image processing, auto focus, and image stabilization (e.g., for digital still cameras, camcorders, etc.). Other consumer applications can include audio and video processors for home theater systems, DVD recorders, and high-definition televisions. Yet other consumer applications can involve advanced touch screen controllers (e.g., for any type of portable media device). Hence, such technologies could readily part of smartphones, tablets, security systems, PCs, gaming technologies, virtual reality, simulation training, etc.

The specifications, dimensions, and relationships outlined herein have only been offered for purposes of example and teaching only. Each of these may be varied considerably without departing from the scope of the appended claims. The specifications apply only to non-limiting examples and, accordingly, they should be construed as such. In the foregoing description, example embodiments have been described with reference to particular arrangements. Various modifications and changes may be made to such embodiments without departing from the scope of the appended claims. The description and drawings are, accordingly, to be regarded in an illustrative rather than a restrictive sense. Further, the operations and steps described with reference to the preceding FIGURES illustrate only some of the possible scenarios that may be executed by, or within, the various apparatuses, processors, devices, and/or systems, described herein. Some of these operations may be deleted or removed where appropriate, or these steps may be modified or changed considerably without departing from the scope of the discussed concepts. In addition, the timing of these operations may be altered considerably and still achieve the results taught in this disclosure. The preceding operational flows have been offered for purposes of example and discussion. Substantial flexibility is provided by the device and/or system in that any suitable arrangements, chronologies, configurations, and timing mechanisms may be provided without departing from the teachings of the discussed concepts.

Note that with the numerous examples provided herein, interaction may be described in terms of two, three, four, or more components. However, this has been done for purposes of clarity and example only. It should be appreciated that the device and system described herein can be consolidated in any suitable manner. Along similar design alternatives, any of the illustrated features of the FIGURES may be combined in various possible configurations, all of which are clearly within the broad scope of this Specification. In certain cases, it may be easier to describe one or more of the functionalities of a given set of flows by only referencing a limited number of device and/or system features. It should be appreciated that the features illustrated in the FIGURES and their associated teachings are readily scalable and can accommodate a large number of features, as well as more complicated/sophisticated arrangements and configurations. Accordingly, the examples provided should not limit the scope or inhibit the broad teachings of the device and/or system as potentially applied to a myriad of other architectures.

Further note that references to various features (for example, elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

### EXAMPLE EMBODIMENT IMPLEMENTATIONS

One particular example implementation may include an apparatus having means for controlling a contactless gesture-based user interface state of a device having a contactless gesture detection system. Various implementations can further include means for detecting gestures associated with a user in a contactless space associated with the device; detecting a defined gesture sequence over a defined time period from the detected gestures; and transitioning the device to a contactless gesture-based user interface locked state or a contactless gesture-based user interface unlocked state based on the defined gesture sequence. The means for' in these instances can include (but is not limited to) using any suitable component discussed herein, along with any suitable software, circuitry, hub, computer code, logic, algorithms, hardware, controller, interface, link, bus, communication pathway, etc.

## Claims

1. A method (100) comprising:
controlling a contactless gesture-based user interface state of a device having a contactless gesture detection system, wherein the controlling includes:
detecting (102) gestures associated with a user in a contactless space associated with the device;
detecting a defined gesture sequence (108) over a defined time period (110) from the detected gestures; and
transitioning the device to a contactless gesture-based user interface locked state (106) or a contactless gesture-based user interface unlocked state (114) based on the defined gesture sequence; and
wherein the contactless gesture-based user interface locked state includes disabling the contactless gesture detection system from triggering the device to perform a function associated with the detected gestures, and wherein the contactless gesture-based user interface unlocked state includes enabling the contactless gesture detection system to trigger the device to perform a function associated with the detected gestures.

2. The method of claim 1, wherein disabling or enabling the contactless gesture detection system from triggering the device to perform a function associated with the detected gestures is performed in only a hardware domain of the device.

3. The method of claim 1, wherein the disabling includes preventing an application of the device from responding to any gestures detected by the contactless gesture detection system.

4. The method of claim 1, wherein the controlling further includes transitioning the device to the contactless gesture-based user interface locked state after a timeout period (104) where the contactless gesture detection system detects no gestures.

5. The method of claim 1, wherein the controlling further includes:
detecting (118) a saturation gesture; and
transitioning the device to the contactless gesture-based user interface locked state in response to detecting the saturation gesture.

6. The method of claim 5, wherein the contactless gesture detection system is an optical gesture detection system that includes an optical proximity sensor device, and wherein the saturation gesture comprises covering the optical proximity sensor device.

7. The method of claim 1 further comprising indicating (116) the contactless gesture-based user interface state of the device to the user.

8. The method of claim 7, wherein the indicating includes:
displaying a lock image in response to the device transitioning to the contactless gesture-based user interface locked state; and
displaying an unlock image in response to the device transitioning to the contactless gesture-based user interface unlocked state.

9. The method of claim 1 wherein:
(a) the method further comprises placing the contactless gesture detection system into a minimum power state in response to the device transitioning to the contactless gesture-based user interface locked state; and/or
(b) the contactless gesture detection system is an optical gesture detection system that includes an optical proximity sensor device.

10. A portable device (10) comprising:
a contactless gesture detection system (20) configured to provide a contactless gesture- based user interface for the portable device, such that a user can interact with the portable device via the contactless gesture-based user interface, wherein the contactless gesture detection system is further configured to control a contactless gesture-based user interface state of the portable device, wherein the controlling includes:
detecting gestures associated with the user in a contactless space (30) associated with the portable device;
detecting a defined gesture sequence over a defined time period from the detected gestures; and
transitioning the portable device to a contactless gesture-based user interface locked state or a contactless gesture-based user interface unlocked state based on the defined gesture sequence; and
wherein the controlling further includes:
disabling the contactless gesture detection system from triggering the device to perform a function associated with the detected gestures in response to transitioning the portable device to the contactless gesture-based user interface locked state; and
enabling the contactless gesture detection system to trigger the device to perform a function associated with the detected gestures in response to the transitioning the portable device to the contactless gesture-based user interface unlocked state.

11. The portable device of claim 10 further comprising a display (15), wherein the portable device is configured to indicate the contactless gesture-based user interface state on the display.

12. The portable device of claim 10, wherein disabling or enabling the contactless gesture detection system from triggering the device to perform a function associated with the detected gestures is performed in only a hardware domain (210) of the portable device.

13. The portable device of claim 10, wherein the controlling further includes:
detecting a saturation gesture; and
transitioning the device to the contactless gesture-based user interface locked state in response to detecting the saturation gesture.

14. The portable device of claim 13, wherein the contactless gesture detection system is an optical gesture detection system that includes an optical proximity sensor device (25).

15. The portable device of claim 14, wherein the saturation gesture comprises covering the optical proximity sensor device.

16. A computer program product for causing a processor to perform the method of any of claims 1 to 9.

## Patentansprüche

1. Verfahren (100), das die folgenden Schritte umfasst:
Steuern eines Zustands einer kontaktlosen, gestenbasierten Anwenderschnittstelle einer Vorrichtung, die ein kontaktloses Gestendetektionssystem aufweist, wobei das Steuern die folgenden Schritte umfasst:
Detektieren (102) von Gesten, die einem Anwender zugeordnet sind, in einem kontaktlosen Raum, der der Vorrichtung zugeordnet ist;
Detektieren einer definierten Gestenabfolge (108) über eine definierte Zeitspanne (110) aus den detektierten Gesten; und
Überführen der Vorrichtung in einen gesperrten Zustand (106) der kontaktlosen, gestenbasierten Anwenderschnittstelle oder in einen entsperrten Zustand (114) der kontaktlosen, gestenbasierten Anwenderschnittstelle auf der Basis der definierten Gestenabfolge; und
wobei der gesperrte Zustand der kontaktlosen, gestenbasierten Anwenderschnittstelle beinhaltet, zu verhindern, dass das kontaktlose Gestendetektionssystem die Vorrichtung veranlasst, eine Funktion auszuführen, die den detektierten Gesten zugeordnet ist, und wobei der entsperrte Zustand der kontaktlosen gestenbasierten Anwenderschnittstelle beinhaltet, zu ermöglichen, dass das kontaktlose Gestendetektionssystem die Vorrichtung veranlasst, eine Funktion auszuführen, die den detektierten Gesten zugeordnet ist.

2. Verfahren nach Anspruch 1, wobei das Verhindern oder Ermöglichen, dass das kontaktlose Gestendetektionssystem die Vorrichtung veranlasst, eine Funktion auszuführen, die den detektierten Gesten zugeordnet ist, nur in einer Hardware-Domäne der Vorrichtung ausgeführt wird.

3. Verfahren nach Anspruch 1, wobei das Verhindern beinhaltet, dass verhindert wird, dass eine Anwendung der Vorrichtung auf irgendwelche Gesten reagiert, die durch das kontaktlose Gestendetektionssystem detektiert werden.

4. Verfahren nach Anspruch 1, wobei das Steuern ferner beinhaltet, dass die Vorrichtung nach einer Sperrzeit (104), in der das kontaktlose Gestendetektionssystem keine Gesten detektiert, in den gesperrten Zustand der kontaktlosen gestenbasierten Anwenderschnittstelle übergeht.

5. Verfahren nach Anspruch 1, wobei das Steuern ferner die folgenden Schritte umfasst:
Detektieren (118) eine Beendigungsgeste; und
Überführen der Vorrichtung in den gesperrten Zustand der kontaktlosen gestenbasierten Anwenderschnittstelle in Reaktion auf das Detektieren der Beendigungsgeste.

6. Verfahren nach Anspruch 5, wobei das kontaktlose Gestendetektionssystem ein optisches Gestendetektionssystem ist, das eine optische Näherungssensorvorrichtung umfasst, und wobei die Beendigungsgeste das Abdecken der optischen Näherungssensorvorrichtung umfasst.

7. Verfahren nach Anspruch 1, das ferner das Anzeigen (116) des Zustands der kontaktlosen gestenbasierten Anwenderschnittstelle der Vorrichtung für den Anwender umfasst.

8. Verfahren nach Anspruch 7, wobei das Anzeigen die folgenden Schritte umfasst:
Anzeigen eines Sperrbildes in Reaktion darauf, dass die Vorrichtung in den gesperrten Zustand der kontaktlosen gestenbasierten Anwenderschnittstelle übergeht; und
Anzeigen eines Entsperrbildes in Reaktion darauf, dass die Vorrichtung in den entsperrten Zustand der kontaktlosen gestenbasierten Anwenderschnittstelle übergeht.

9. Verfahren nach Anspruch 1, wobei:
(a) das Verfahren ferner in Reaktion darauf, dass die Vorrichtung in den gesperrten Zustand der kontaktlosen gestenbasierten Anwenderschnittstelle übergeht, das Einstellen des kontaktlosen Gestendetektionssystems in einen Zustand mit minimaler Leistung umfasst; und/oder
(b) das kontaktlose Gestendetektionssystem ein optisches Gestendetektionssystem ist, das eine optische Näherungssensorvorrichtung umfasst.

10. Tragbare Vorrichtung (10), die Folgendes umfasst:
ein kontaktloses Gestendetektionssystem (20), das konfiguriert ist, eine kontaktlose, gestenbasierte Anwenderschnittstelle für die tragbare Vorrichtung bereitzustellen, so dass ein Anwender mit der tragbaren Vorrichtung mittels der kontaktlosen gestenbasierten Anwenderschnittstelle kommunizieren kann, wobei das kontaktlose Gestendetektionssystem ferner konfiguriert ist, einen Zustand der kontaktlosen gestenbasierten Anwenderschnittstelle der tragbaren Vorrichtung zu steuern, wobei das Steuern die folgenden Schritte umfasst:
Detektieren von Gesten, die dem Anwender zugeordnet sind, in einem kontaktlosen Raum (30), der der tragbaren Vorrichtung zugeordnet ist;
Detektieren einer definierten Gestenabfolge über eine definierte Zeitspanne aus den detektierten Gesten; und
Überführen der tragbaren Vorrichtung in einen gesperrten Zustand der kontaktlosen, gestenbasierten Anwenderschnittstelle oder in einen entsperrten Zustand der kontaktlosen, gestenbasierten Anwenderschnittstelle auf der Basis der definierten Gestenabfolge; und
wobei das Steuern ferner die folgenden Schritte umfasst:
in Reaktion auf das Überführen der tragbaren Vorrichtung in den gesperrten Zustand der kontaktlosen gestenbasierten Anwenderschnittstelle Verhindern, dass das kontaktlose Gestendetektionssystem die Vorrichtung veranlasst, eine Funktion auszuführen, die den detektierten Gesten zugeordnet ist; und
in Reaktion auf das Überführen der tragbaren Vorrichtung in den entsperrten Zustand der kontaktlosen gestenbasierten Anwenderschnittstelle Ermöglichen, dass das kontaktlose Gestendetektionssystem die Vorrichtung veranlasst, eine Funktion auszuführen, die den detektierten Gesten zugeordnet ist.

11. Tragbare Vorrichtung nach Anspruch 10, die ferner eine Anzeige (15) umfasst, wobei die tragbare Vorrichtung konfiguriert ist, den Zustand der kontaktlosen gestenbasierten Anwenderschnittstelle auf der Anzeige anzuzeigen.

12. Tragbare Vorrichtung nach Anspruch 10, wobei das Verhindern oder Ermöglichen, dass das kontaktlose Gestendetektionssystem die Vorrichtung veranlasst, eine Funktion auszuführen, die den detektierten Gesten zugeordnet ist, nur in einer Hardware-Domäne (210) der tragbaren Vorrichtung ausgeführt wird.

13. Tragbare Vorrichtung nach Anspruch 10, wobei das Steuern ferner die folgenden Schritte umfasst:
Detektieren einer Beendigungsgeste; und
Überführen der Vorrichtung in den gesperrten Zustand der kontaktlosen gestenbasierten Anwenderschnittstelle in Reaktion auf das Detektieren der Beendigungsgeste.

14. Tragbare Vorrichtung nach Anspruch 13, wobei das kontaktlose Gestendetektionssystem ein optisches Gestendetektionssystem ist, das eine optische Näherungssensorvorrichtung (25) umfasst.

15. Tragbare Vorrichtung nach Anspruch 14, wobei die Beendigungsgeste das Abdecken der optischen Näherungssensorvorrichtung umfasst.

16. Computerprogrammprodukt, um zu veranlassen, dass ein Prozessor das Verfahren nach einem der Ansprüche 1 bis 9 ausführt.

## Revendications

1. Procédé (100) comprenant:
- la commande d'un état d'interface utilisateur basée sur un geste sans contact d'un dispositif comportant un système de détection de geste sans contact, dans lequel la commande comprend :
. la détection (102) de gestes associés à un utilisateur dans un espace sans contact associé au dispositif ;
. la détection d'une séquence définie de gestes (108) au cours d'une période de temps définie (110) à partir des gestes détectés ; et
. le passage du dispositif à un état verrouillé d'interface utilisateur basée sur un geste sans contact (106) ou à un état déverrouillé d'interface utilisateur basée sur un geste sans contact (114) sur la base de la séquence définie de gestes ; et
dans lequel l'état verrouillé d'interface utilisateur basée sur un geste sans contact comprend la désactivation du déclenchement, par le système de détection de geste sans contact, du dispositif pour qu'il réalise une fonction associée aux gestes détectés, et dans lequel l'état déverrouillé d'interface utilisateur basée sur un geste sans contact inclut l'activation du déclenchement, par le système de détection de geste sans contact, du dispositif pour qu'il réalise une fonction associée aux gestes détectés.

2. Procédé selon la revendication 1, dans lequel la désactivation ou l'activation du déclenchement, par le système de détection de geste sans contact, du dispositif pour qu'il réalise une fonction associée aux gestes détectés, est réalisée dans un domaine matériel du dispositif.

3. Procédé selon la revendication 1, dans lequel la désactivation comprend le fait d'empêcher une application du dispositif de répondre à tout geste détecté par le système de détection de geste sans contact.

4. Procédé selon la revendication 1, dans lequel la commande comprend en outre le passage du dispositif à l'état verrouillé d'interface utilisateur basée sur un geste sans contact après une période de temporisation (104) où le système de détection de geste sans contact ne détecte aucun geste.

5. Procédé selon la revendication 1, dans lequel la commande comprend en outre :
- la détection (118) d'un geste de saturation ; et
- le passage du dispositif à l'état verrouillé d'interface utilisateur basée sur un geste sans contact en réponse à la détection du geste de saturation.

6. Procédé selon la revendication 5, dans lequel le système de détection de geste sans contact est un système de détection de geste optique qui comporte un dispositif de détection de proximité optique, et dans lequel le geste de saturation comprend la couverture du dispositif de détection de proximité optique.

7. Procédé selon la revendication 1 comprenant en outre l'indication (116) de l'état d'interface utilisateur basée sur un geste sans contact du dispositif à l'utilisateur.

8. Procédé selon la revendication 7, dans lequel l'indication comprend :
- l'affichage d'une image de verrouillage en réponse au passage du dispositif à l'état verrouillé d'interface utilisateur basée sur un geste sans contact ; et
- l'affichage d'une image de déverrouillage en réponse au passage du dispositif à l'état déverrouillé d'interface utilisateur basée sur un geste sans contact.

9. Procédé selon la revendication 1 dans lequel :
(a) le procédé comprend en outre la mise du système de détection de geste sans contact dans un état de consommation minimum en réponse au passage du dispositif à l'état verrouillé d'interface utilisateur basée sur un geste sans contact ; et/ou
(b) le système de détection de geste sans contact est un système de détection de geste optique qui comporte un dispositif de détection de proximité optique.

10. Dispositif portable (10) comprenant :
- un système de détection de geste sans contact (20) configuré pour fournir une interface utilisateur basée sur un geste sans contact pour le dispositif portable, de telle manière qu'un utilisateur peut interagir avec le dispositif portable par l'intermédiaire de l'interface utilisateur basée sur un geste sans contact, dans lequel le système de détection de geste sans contact est en outre configuré pour commander un état d'interface utilisateur basée sur un geste sans contact du dispositif portable, dans lequel la commande comprend :
- la détection de gestes associés à l'utilisateur dans un espace sans contact (30) associé au dispositif portable ;
- la détection d'une séquence définie de gestes au cours d'une période de temps définie à partir des gestes détectés ; et
- le passage du dispositif portable à un état verrouillé d'interface utilisateur basée sur un geste sans contact ou à un état déverrouillé d'interface utilisateur basée sur un geste sans contact sur la base de la séquence définie de gestes ; et dans lequel la commande comprend en outre :
- la désactivation du déclenchement, par le système de détection de geste sans contact, du dispositif pour qu'il réalise une fonction associée aux gestes détectés en réponse au passage du dispositif portable à l'état verrouillé d'interface utilisateur basée sur un geste sans contact ; et
- l'activation du déclenchement, par le système de détection de geste sans contact, du dispositif pour qu'il réalise une fonction associée aux gestes détectés en réponse au passage du dispositif portable à l'état déverrouillé d'interface utilisateur basée sur un geste sans contact.

11. Dispositif portable selon la revendication 10 comprenant en outre un dispositif d'affichage (15), dans lequel le dispositif portable est configuré pour indiquer l'état d'interface utilisateur basée sur un geste sans contact sur le dispositif d'affichage.

12. Dispositif portable selon la revendication 10, dans lequel la désactivation ou l'activation du déclenchement, par le système de détection de geste sans contact, du dispositif pour qu'il réalise une fonction associée aux gestes détectés, est réalisée dans un domaine matériel (210) du dispositif portable.

13. Dispositif portable selon la revendication 10, dans lequel la commande comporte en outre :
- la détection d'un geste de saturation ; et
- le passage du dispositif à l'état verrouillé d'interface utilisateur basée sur un geste sans contact en réponse à la détection du geste de saturation.

14. Dispositif portable selon la revendication 13, dans lequel le système de détection de geste sans contact est un système de détection de geste optique qui comporte un dispositif de détection de proximité optique (25).

15. Dispositif portable selon la revendication 14, dans lequel le geste de saturation comprend la couverture du dispositif de détection de proximité optique.

16. Produit de programme informatique pour amener un processeur à réaliser le procédé selon l'une quelconque des revendications 1 à 9.
